# FASCICULE DE BREVET EUROPEEN

(11) **EP 3 218 148 B1**
(45) Date de publication et mention de la délivrance du brevet: **19.12.2018**
(21) Numéro de dépôt: 15785168.4
(22) Date de dépôt: 14.10.2015
(51) Int. Cl.: B25B 27/30, B62D 65/12

(54) **MACHINE DE MONTAGE D'UN TRAIN ARRIÈRE DE VÉHICULE, COMPORTANT UN SYSTÈME D'ACCROCHAGE DE LA CAISSE ET UN MOYEN DE SOULÈVEMENT DE CHAQUE BRAS DE SUSPENSION**
MASCHINE ZUR MONTAGE VON FAHRZEUGHINTERACHSEN MIT EINEM SYSTEM ZUR VERANKERUNG DER KAROSSERIE UND EINEM MITTEL ZUM ANHEBEN JEDES AUFHÄNGUNGSARMS
MACHINE FOR MOUNTING A VEHICLE REAR AXLE, COMPRISING A SYSTEM FOR ANCHORING THE BODY SHELL AND A MEANS FOR LIFTING EACH SUSPENSION ARM

(30) Priorité: 13.11.2014 FR 1460919
(43) Date de publication de la demande: 20.09.2017
(73) Titulaire: PSA Automobiles SA, 78300 Poissy (FR)
(72) Inventeur: ANDRE, Vincent, 25250 L'Isle-sur-le-Doubs (FR)
(74) Mandataire: Fernandez, Francis Lionel
(86) Numéro de dépôt international: PCT/FR2015/052759
(87) Numéro de publication internationale: WO 2016/075378

(56) Documents cités:
- WO-A1-2007/100326
- FR-A1- 3 004 158
- US-A- 4 736 505

## Description

La présente invention concerne une machine d'aide au montage d'un train arrière de véhicule automobile, ainsi qu'un procédé de montage de ce train arrière à l'aide d'une telle machine.

Les véhicules automobiles comportent généralement un train arrière fixé sous la caisse, qui supporte et guide les roues arrière en permettant un débattement des suspensions.

Un type de train arrière connu appelé train à traverse déformable, présenté notamment par le document FR-A1-2888559, comporte un essieu présentant une forme générale en « H », comprenant de chaque côté du véhicule un bras de suspension disposé longitudinalement. L'avant des bras de suspension est relié à la caisse du véhicule par une articulation comprenant une liaison élastique pouvant pivoter suivant un axe sensiblement transversal, l'arrière de ces bras supporte le moyeu de la roue.

La barre centrale du « H » constitue une traverse déformable disposée transversalement, dont chaque extrémité est fixée de manière rigide à l'intérieur d'un bras de suspension. Cette traverse déformable maintient la géométrie des bras de suspension, tout en assurant par une déformation en torsion suivant son axe, la fonction de barre anti-dévers qui limite l'angle de roulis de la caisse.

La caisse du véhicule est supportée par des ressorts de suspension qui prennent appui sur un plateau disposé à l'arrière de chaque bras. De chaque côté, un amortisseur hydraulique télescopique est installé en parallèle du ressort de suspension, à l'intérieur ou sur le côté de ce ressort.

Pour l'assemblage de ce type de train arrière sous le véhicule, il est connu de positionner le train sous la caisse avec un outillage, et de fixer à cette caisse les axes des liaisons élastiques à l'avant des deux bras de suspension.

Après avoir mis en place les ressorts de suspension, une opération suivante consiste à comprimer ces ressorts par un effort de pivotement des bras de suspension vers le haut, autour des axes des liaisons avant, ce qui positionne le train à une hauteur définie permettant le montage des amortisseurs.

Ensuite l'outillage relâche le train arrière, les amortisseurs constituant des butées de fin de course des bras quand les ressorts de suspension se détendent.

Un problème qui se pose alors est de réaliser cette compression des ressorts de suspension par un moyen simple, économique, rapide et fiable, évitant tout risque d'accident. L'énergie détenue dans les ressorts de suspension comprimés étant importante, une détente brutale accidentelle peut blesser les opérateurs se trouvant à proximité.

Par ailleurs un type de machine connu de compression de ressorts de suspension, présenté notamment par le document WO-A1-2007100326, comporte un chariot comprenant un moyen de guidage d'un amortisseur d'une suspension du type MacPherson, et un vérin de compression du ressort de suspension entourant cet amortisseur, afin de réaliser en toute sécurité des opérations de démontage et de remontage de cet ensemble.

Toutefois ce type de machine dédié pour un ensemble isolé de suspension du type MacPherson, n'est pas utilisable pour la compression des deux ressorts d'un train arrière à traverse déformable déjà fixé sous le véhicule.
Le document US 4 736 505 A décrit une machine d'aide au montage d'un train arrière du véhicule selon le préambule de la revendication 1.

La présente invention a notamment pour but d'éviter ces inconvénients de la technique antérieure.

Elle propose à cet effet une machine d'aide au montage d'un train arrière à traverse déformable sur un véhicule, ce train comportant de chaque côté un bras de suspension longitudinal présentant à l'avant une liaison sur la caisse de ce véhicule, et à l'arrière un support recevant l'embase d'un ressort de suspension, les deux bras étant reliés entre eux de manière rigide par une traverse déformable, caractérisée en ce qu'elle comporte un chariot disposant d'un système d'accrochage ajustable en hauteur, prévu pour se fixer entre les deux bras de suspension, sur le train arrière ou la caisse en empêchant une montée, ce chariot comprenant de chaque côté du système d'accrochage, un moyen de soulèvement prévu pour appliquer à l'arrière de chaque bras un effort vers le haut.

Un avantage de cette machine d'aide au montage est que la caisse du véhicule étant installée en hauteur sur un pont, avec son train arrière fixé par les liaisons avant de chaque bras, en positionnant le chariot en dessous de la caisse on peut facilement fixer le système d'accrochage sous le train ou la caisse grâce à son support coulissant en hauteur, puis appliquer par les deux vérins une force sur chaque bras comprimant son ressort pour ajuster la hauteur de ces bras permettant le montage des amortisseurs, et enfin redescendre les deux vérins puis le système d'accrochage, ce qui libère le chariot.

On notera que les efforts de maintien de la caisse qui empêchent sa montée, et les deux efforts de pression vers le haut sur les bras de suspension, étant repris par le même chariot posé au sol, on a ainsi un bouclage de ces efforts direct sur la machine, qui assure la facilité de mise en place et la sécurité.

La machine d'aide au montage selon l'invention peut de plus comporter une ou plusieurs des caractéristiques suivantes, qui peuvent être combinées entre elles.

Avantageusement, le support ajustable en hauteur comporte un mât télescopique permettant d'effectuer cet ajustement.

Avantageusement, le système d'accrochage comporte deux éléments s'écartant symétriquement vers l'extérieur du véhicule, pour réaliser l'accrochage.

En particulier, le système d'accrochage peut comporter un tube transversal, guidant deux coulisseaux s'écartant vers l'extérieur.

Avantageusement, les moyens de soulèvement comportent un vérin hydraulique appliquant l'effort.

Dans ce cas, chaque moyen de soulèvement peut comporter un cric hydraulique.

Avantageusement, la machine d'aide au montage comporte une plate-forme montée sur des roulettes, supportant les différents systèmes de cette machine.

Avantageusement, la machine d'aide au montage comporte un moyen de vissage des amortisseurs du véhicule, monté sur un système qui compense son poids.

En particulier, la machine d'aide au montage peut comporter une commande automatique de différents mouvements de systèmes de cette machine.

L'invention a aussi pour objet un procédé de montage d'un train arrière à traverse déformable de véhicule automobile, comportant des bras longitudinaux fixés par des articulations avant à la caisse du véhicule, et des ressorts de suspension ainsi que des amortisseurs fixés sur ces bras, à l'aide d'une machine d'aide au montage comprenant l'une quelconque des caractéristiques précédentes, ce procédé comportant les opérations suivantes:
- les articulations avant des bras de suspension sont fixés à la caisse, ces bras étant maintenus inclinés dans une position prédéfinie par un outillage de maintien ;
- la machine est positionnée sous le véhicule, et le système d'accrochage est fixé au train arrière ou à la caisse de ce véhicule ; et
- les moyens de soulèvement appliquent les efforts sur chaque bras de suspension pour les positionner à une hauteur permettant le montage des amortisseurs.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue de côté de la partie arrière de la caisse d'un véhicule recevant un train arrière à traverse déformable ; et
- les figures 2 et 3 sont des vues respectivement de côté et arrière, d'une machine d'aide au montage disposée sous le train arrière pour effectuer des opérations de montage de ce train.

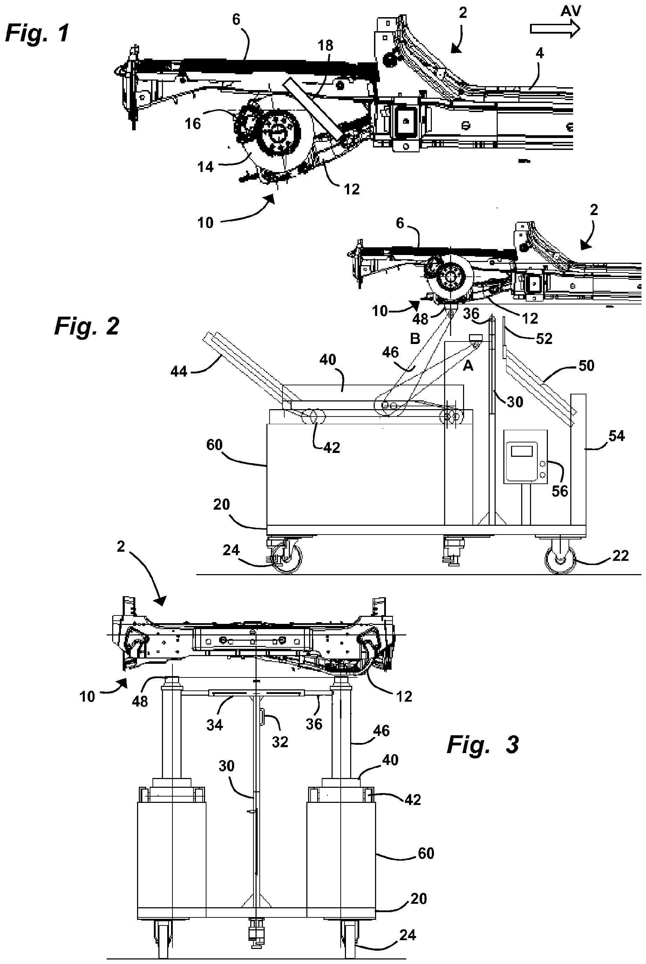

La figure 1 présente une caisse de véhicule 2 comprenant vers l'avant indiqué par la flèche notée « AV », deux longerons latéraux 4, et vers l'arrière deux longerons surélevés 6 supportant le plancher du coffre de ce véhicule.

Un train arrière à traverse déformable installé sous le coffre du véhicule, comporte deux bras de suspension latéraux 12 disposés longitudinalement, comprenant chacun une articulation avant présentant un axe sensiblement transversal, qui est fixé en arrière des longerons latéraux 4.

La partie arrière de chaque bras de suspension 12 reçoit un porte-moyeu supportant un disque de frein 14, qui est freiné par un étrier de frein 16 fixé sur ce bras. La partie arrière du bras de suspension 12 comporte aussi un plateau sensiblement horizontal, recevant la base d'un ressort de suspension hélicoïdal, dont l'extrémité supérieure prend appui sous le plancher du coffre de la caisse 2.

Lors des premières opérations de montage du train arrière 10 sous la caisse du véhicule 2 disposée en hauteur pour pouvoir circuler en dessous, un système de guidage vient positionner ce train sous cette caisse en alignant les articulations avant de chaque bras de suspension 12 sur leurs points de fixation de la caisse, et en supportant le train de manière à maintenir une certaine inclinaison de ces bras.

L'opérateur fixe alors les articulations avant de chaque bras de suspension 12 sur la caisse du véhicule, et pour chacun de ces bras accroche un outillage de retenue comprenant une sangle 18 d'un côté à la caisse du véhicule 2, et de l'autre côté à ce bras afin de le maintenir dans une position d'inclinaison prédéterminée quand le système de guidage du train arrière 10 est retiré.

En particulier la position d'inclinaison prédéterminée des bras de suspension 12, permet d'insérer les ressorts de suspension au-dessus de ces bras, qui sont alors dans une position de début de compression.

Les figures 2 et 3 présentent une machine d'aide au montage du train arrière comprenant un chariot 20 présentant une plate-forme équipée à l'avant de deux roulettes fixes suivant la direction longitudinale 22, et à l'arrière de deux roulettes mobiles suivant un axe vertical 24, équipées de freins.

Un mât télescopique 30 disposé dans l'axe médian du chariot 20, vers l'avant, comporte dans sa partie supérieure une poignée 32 permettant de le faire coulisser vers le haut, et à son extrémité supérieure un tube transversal horizontal 34 d'ancrage sous la caisse du véhicule.

Le tube transversal 34 comporte de chaque côté une coulisse transversale 36 guidée suivant l'axe par une rainure de ce tube, qui permet de prolonger de chaque côté le tube transversal.

On peut avec la poignée 32 soulever la partie télescopique du mât 30 de manière à positionner en hauteur le tube transversal 34 au-dessus de deux points de fixation latéraux sur la caisse du véhicule, puis ensuite écarter chaque coulisse 36 pour engager leurs extrémités extérieures sur ces points de fixation. On réalise ainsi par l'intermédiaire du mât 30 un accrochage formant un blocage vers le haut de la caisse du véhicule, par rapport au chariot 20.

La plate-forme du chariot 20 reçoit en arrière du mât télescopique 30 et de chaque côté, un caisson 60 recevant au-dessus un cric 40 posé sur quatre roulettes 42 qui sont fixées sur ce caisson de manière à éviter un glissement des crics.

Chaque cric 40 possède vers l'arrière une tige manoeuvre 44 actionnant une pompe qui remplit un vérin hydraulique soulevant un levier articulé 46 disposé vers l'avant, qui se termine par un patin 48 tourné vers le haut.

En avant du mât télescopique 30 la plate-forme du chariot 20 présente un support vertical 54 supportant un pantographe 50, recevant à son extrémité supérieure un système de vissage 52 des amortisseurs du train arrière. Avantageusement le pantographe 50 comporte une compensation de la masse du système de vissage 52, pour pouvoir le soulever sans effort.

La plate-forme du chariot 20 reçoit aussi entre le mât télescopique 30 et le support 54 du pantographe 50, un pupitre de commande électrique 56 destiné à commander les différents mouvements de la machine d'aide au montage, dans le cas où ils sont automatisés.

Le procédé d'assemblage du train arrière est le suivant.

Après avoir fixé les articulations avant des bras de suspension 12 à la caisse du véhicule 2, et disposé les sangles de retenue 18 puis mis en place les ressorts de suspension légèrement précontraints, comme présenté figure 1, un opérateur positionne le chariot 20 en dessous de la caisse du véhicule, comme présenté figures 2 et 3.

L'opérateur met en place ensuite le système d'accrochage en levant le mât 30 et en engageant les coulisses 36, pour maintenir la hauteur de la caisse du véhicule par rapport à la plate-forme du chariot 20.

L'opérateur peut alors actionner le levier de manoeuvre 44 de chaque cric 40 pour lever son levier articulé 46 passant de la position « A », à la position « B » où le patin de ce levier 48 prend appui en dessous de la partie arrière du bras de suspension 12, pour la soulever en comprimant le ressort de suspension. Pendant ce temps la caisse du véhicule 2 maintenue par le mât télescopique 30, est immobilisée dans le sens vertical.

L'opérateur peut ainsi facilement, avec un faible effort et en toute sécurité, par le remplissage du vérin hydraulique de chaque cric 40, ajuster la hauteur du bras de suspension 12 de manière à obtenir la hauteur voulue permettant la fixation de l'amortisseur.

L'opérateur redescend ensuite chaque levier 46 des crics 40 en ouvrant la vanne de vidange des vérins hydrauliques, les bras de suspension 12 sont alors retenus vers le bas par leurs amortisseurs télescopiques qui réalisent la butée de fin de course. Dans le même temps la contrainte en traction s'appliquant sur le mât télescopique 30 disparaît, ce qui permet ensuite de redescendre le système d'accrochage supérieur de ce mât.

L'opérateur peut enfin déplacer le chariot de la machine d'aide au montage, qui est facilement mobile grâce à ses roulettes 22, 24, pour réaliser la même opération sur le véhicule suivant de la chaîne d'assemblage.

On notera que l'utilisation de crics standards montés sur des roulettes 40, permet de prendre des éléments du commerce produits en grande série de manière économique. Toutefois on peut utiliser d'autres moyens de levage pour soulever les bras de suspension 12, comme par exemple un vérin hydraulique disposé verticalement, ou un vérin électrique. Le fonctionnement de ces moyens de levage peut être automatisé.

Par ailleurs on peut aussi automatiser le fonctionnement du mât télescopique 30, avec une motorisation lui permettant de monter et de s'accrocher automatiquement à la caisse du véhicule.

Le pupitre de commande 56 peut alors servir à commander chacun des mouvements, de manière séquentielle avec un opérateur sélectionnant chaque mouvement, ou suivant un cycle automatique avec ces mouvements s'enchaînant automatiquement.

## Revendications

1. Machine d'aide au montage d'un train arrière à traverse déformable (10) sur un véhicule (2), ce train comportant de chaque côté un bras de suspension longitudinal (12) présentant à l'avant une liaison sur la caisse de ce véhicule, et à l'arrière un support recevant l'embase d'un ressort de suspension, les deux bras étant reliés entre eux de manière rigide par une traverse déformable, **caractérisée en ce qu'**elle comporte un chariot (20) disposant d'un système d'accrochage (36) ajustable en hauteur, prévu pour se fixer entre les deux bras de suspension (12), sur le train arrière (10) ou la caisse (2) en empêchant une montée, ce chariot comprenant de chaque côté du système d'accrochage, un moyen de soulèvement (40) prévu pour appliquer à l'arrière de chaque bras un effort vers le haut.

2. Machine d'aide au montage selon la revendication 1, **caractérisée en ce que** le support ajustable en hauteur comporte un mât télescopique (30) permettant d'effectuer cet ajustement.

3. Machine d'aide au montage selon la revendication 1 ou 2, **caractérisée en ce que** le système d'accrochage comporte deux éléments s'écartant symétriquement vers l'extérieur du véhicule (36), pour réaliser l'accrochage.

4. Machine d'aide au montage selon la revendication 3, **caractérisée en ce que** le système d'accrochage comporte un tube transversal (34), guidant deux coulisseaux (36) s'écartant vers l'extérieur.

5. Machine d'aide au montage selon l'une quelconque des revendications précédentes, **caractérisée en ce que** les moyens de soulèvement (40) comportent un vérin hydraulique appliquant l'effort.

6. Machine d'aide au montage selon la revendication 5, **caractérisée en ce que** chaque moyen de soulèvement comporte un cric hydraulique (40).

7. Machine d'aide au montage selon l'une quelconque des revendications précédentes, **caractérisée en ce qu'**elle comporte une plate-forme montée sur des roulettes (22, 24), supportant les différents systèmes de cette machine.

8. Machine d'aide au montage selon l'une quelconque des revendications précédentes, **caractérisée en ce qu'**elle comporte un moyen de vissage (52) des amortisseurs du véhicule, monté sur un système (50) qui compense son poids.

9. Machine d'aide au montage selon l'une quelconque des revendications précédentes, **caractérisée en ce qu'**elle comporte une commande automatique (56) de différents mouvements de systèmes de cette machine.

10. Procédé de montage d'un train arrière à traverse déformable de véhicule automobile, comportant des bras longitudinaux (12) fixés par des articulations avant à la caisse du véhicule (2), et des ressorts de suspension ainsi que des amortisseurs (28) fixés sur ces bras, à l'aide d'une machine d'aide au montage selon l'une quelconque des revendications précédentes, **caractérisé en ce qu'**il comporte les opérations suivantes :
- les articulations avant des bras de suspension (12) sont fixés à la caisse, ces bras étant maintenus inclinés dans une position prédéfinie par un outillage de maintien (18) ;
- la machine est positionnée sous le véhicule, et le système d'accrochage (36) est fixé au train arrière (10) ou à la caisse (2) de ce véhicule ; et
- les moyens de soulèvement (40) appliquent les efforts sur chaque bras de suspension (12) pour les positionner à une hauteur permettant le montage des amortisseurs.

## Patentansprüche

1. Maschine zur Hilfe bei der Montage einer Hinterachse mit verformbarem Längsträger (10) auf einem Fahrzeug (2), wobei diese Achse auf jeder Seite einen Längsaufhängungsarm (12) umfasst, der an der Vorderseite eine Verbindung auf der Karosserie dieses Fahrzeugs aufweist, und auf der Rückseite einen Träger, der den Sockel einer Aufhängungsfeder empfängt, wobei die zwei Arme miteinander starr durch einen verformbarem Querträger verbunden sind, **dadurch gekennzeichnet, dass** sie einen Wagen (20) umfasst, der über ein höhenverstellbares Anhängsystem (36) verfügt, das vorgesehen ist, um sich zwischen den zwei Aufhängungsarmen (12) auf der Hinterachse (10) oder der Karosserie (2) zu befestigen, indem ein Hub verhindert wird, wobei dieser Wagen auf jeder Seite des Anhängsystems ein Hubmittel (40) umfasst, das vorgesehen ist, um an der Rückseite jedes Arms eine Kraft nach oben anzulegen.

2. Maschine zur Hilfe bei der Montage nach Anspruch 1, **dadurch gekennzeichnet, dass** der höhenverstellbare Träger einen teleskopischen Mast (30), der es erlaubt, diese Einstellung auszuführen, umfasst.

3. Maschine zur Hilfe bei der Montage nach Anspruch 1 oder 2, **dadurch gekennzeichnet, dass** das Anhängsystem zwei Elemente umfasst, die sich symmetrisch zu dem Äußeren des Fahrzeugs (36) spreizen, um das Anhängen auszuführen.

4. Maschine zur Hilfe bei der Montage nach Anspruch 3, **dadurch gekennzeichnet, dass** das Anhängsystem ein Querrohr (34), das zwei Stößel (36), die sich nach außen spreizen, führt, umfasst.

5. Maschine zur Hilfe bei der Montage nach einem der vorstehenden Ansprüche, **dadurch gekennzeichnet, dass** die Hubmittel (40) einen hydraulischen Zylinder umfassen, der die Kraft anlegt.

6. Maschine zur Hilfe bei der Montage nach Anspruch 5, **dadurch gekennzeichnet, dass** jedes Hubmittel einen hydraulischen Heber (40) umfasst.

7. Maschine zur Hilfe bei der Montage nach einem der vorstehenden Ansprüche, **dadurch gekennzeichnet, dass** sie eine Plattform umfasst, die auf Rollen (22, 24), die die unterschiedlichen Systeme dieser Maschine stützen, montiert ist.

8. Maschine zur Hilfe bei der Montage nach einem der vorhergehenden Ansprüche, **dadurch gekennzeichnet, dass** sie ein Mittel (52) zum Schrauben der Stoßfänger des Fahrzeugs, das auf ein System (50), das sein Gewicht kompensiert, montiert ist, umfasst.

9. Maschine zur Hilfe bei der Montage nach einem der vorstehenden Ansprüche, **dadurch gekennzeichnet, dass** sie eine automatische Steuerung (56) unterschiedlicher Bewegungen von Systemen dieser Maschine umfasst.

10. Verfahren zur Montage einer Hinterachse mit verformbarem Querträger für Kraftfahrzeug, das Längsarme (12) umfasst, die durch vordere Anlenkungen an der Karosserie des Fahrzeugs (2) befestigt sind, und Aufhängungsfedern, sowie Stoßfänger (28) die auf diesen Armen befestigt sind, mit Hilfe einer Maschine zur Hilfe bei der Montage nach einem der vorstehenden Ansprüche, **dadurch gekennzeichnet, dass** es die folgenden Vorgänge umfasst:
- die vorderen Anlenkungen der Aufhängungsarme (12) werden an der Karosserie befestigt, wobei diese Arme in einer vordefinierten Position von einem Haltewerkzeug (18) geneigt gehalten werden;
- die Maschine wird unter dem Fahrzeug positioniert, und das Anhängsystem (36) wird an der Hinterachse (10) oder an der Karosserie (2) dieses Fahrzeugs befestigt; und
- die Hubmittel (40) legen die Kräfte auf jeden Aufhängungsarm (12) an, um ihn in einer Höhe zu positionieren, die die Montage der Stoßfänger erlaubt.

## Claims

1. A machine for assisting the mounting of a rear axle with a deformable crossmember (10) onto a vehicle (2), said axle comprising a longitudinal suspension arm (12) on each side, having a connection at the front on the body shell of said vehicle and having a support at the rear for receiving the base of a suspension spring, the two arms being connected together in a rigid manner by a deformable crossmember, **characterized in that** said machine comprises a trolley (20) having a height-adjustable anchoring system (36) provided for it being fixed between the two suspension arms (12), on the rear axle (10) or the body shell (2) while preventing rising, said trolley including, on each side of the anchoring system, a lifting means (40) provided for applying an upward force to the rear of each arm.

2. The machine for assisting mounting according to claim 1, **characterized in that** the height-adjustable support comprises a telescopic post (30) permitting this adjustment to be carried out.

3. The machine for assisting mounting according to claim 1 or 2, **characterized in that** the anchoring system comprises two elements diverging symmetrically towards the exterior of the vehicle (36), to provide the anchoring.

4. The machine for assisting mounting according to claim 3, **characterized in that** the anchoring system comprises a transverse tube (34) guiding two slides (36) diverging towards the exterior.

5. The machine for assisting mounting according to any one of the preceding claims, **characterized in that** the lifting means (40) comprise a hydraulic actuator applying the force.

6. The machine for assisting mounting according to claim 5, **characterized in that** each lifting means comprises a hydraulic jack (40).

7. The machine for assisting mounting according to any one of the preceding claims, **characterized in that** it comprises a platform mounted on rollers (22, 24), supporting the different systems of this machine.

8. The machine for assisting mounting according to any one of the preceding claims, **characterized in that** it comprises a tightening means (52) of the shock absorbers of the vehicle, mounted on a system (50) which compensates its weight.

9. The machine for assisting mounting according to any one of the preceding claims, **characterized in that** it comprises an automatic command (56) of different movements of systems of this machine.

10. A method for mounting a rear axle with a deformable crossmember of a motor vehicle, comprising longitudinal arms (12) fixed by front articulations to the body shell of the vehicle (2), and suspension springs and also shock absorbers (28) fixed on these arms, by means of a machine for assisting mounting according to any one of the preceding claims, **characterized in that** it comprises the following operations:
- the front articulations of the suspension arms (12) are fixed to the body shell, these arms being held inclined in a predefined position by a holding tool (18);
- the machine is positioned beneath the vehicle, and the anchoring system (36) is fixed to the rear axle (10) or to the body shell (2) of this vehicle; and
- the lifting means (40) apply the forces on each suspension arm (12) to position them at a height permitting the mounting of the shock absorbers.
